Europäisches Patentamt

European Patent Office

Office européen des brevets

(19)

(11) Veröffentlichungsnummer: **0 108 040 B1**

(12) **EUROPÄISCHE PATENTSCHRIFT**

(45) Veröffentlichungstag der Patentschrift:
30.04.86

(21) Anmeldenummer: 83810472.7

(22) Anmeldetag: 12.10.83

(51) Int. Cl.⁴: **H 02 K 15/085,** H 02 K 3/50, H 02 K 3/28

(54) Verfahren zum automatischen Bewickeln eines ringförmigen ferromagnetischen Körpers, Wickelmaschine zur Durchführung dieses Verfahrens und bewickelter Stator.

(30) Priorität: **22.10.82 CH 6152/82**

(43) Veröffentlichungstag der Anmeldung:
09.05.84 Patentblatt 84/19

(45) Bekanntmachung des Hinweises auf die Patenterteilung:
30.04.86 Patentblatt 86/18

(84) Benannte Vertragsstaaten:
AT BE CH DE FR GB IT LI NL SE

(56) Entgegenhaltungen:
DE - A - 2 348 641
FR - A - 1 134 892
FR - A - 2 355 396
US - A - 2 624 518
US - A - 3 220 094
US - A - 3 334 825
US - A - 4 170 505

(73) Patentinhaber: K + S Schrittmotoren GmbH,
Mühlenstrasse 4, D-8540 Schwabach (DE)

(72) Erfinder: Hetzel, Max, Jurastrasse 563,
CH-4707 Deitingen (CH)

(74) Vertreter: Steiner, Martin et al, c/o AMMANN
PATENTANWAELTE AG BERN Schwarztorstrasse 31,
CH-3001 Bern (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die vorliegende Erfindung betrifft ein Verfahren zum automatischen Bewickeln eines ringförmigen ferromagnetischen Körpers für eine rotierende elektrische Maschine, mit nach innen offenen, axial verlaufenden Nuten gemäss Oberbegriff des Anspruchs 1. Ein Verfahren dieser Art ist bekannt aus der US-PS 3,220,094. Der Wickeldraht wird hierbei mittels axial durch die Bohrung des ferromagnetischen Körpers durchführbarer, quer zur Bohrungsachse orientierter Drahtausgabe-Organe zugeführt und in die Nuten eingelegt, und der jeweils in eine Nut eingelegte Drahtabschnitt wird jeweils axial ausserhalb des Körpers durch einen Haken erfasst und nach aussen über axial vorstehende Tragfahnen aus Isoliermaterial gelegt. Die quer zur Bohrungsachse stehenden Drahtausgabe-Organe beschränken die Anwendung auf ferromagnetische Körper mit weiten Bohrungen, und die einfachen, hakenförmigen Drahtübernahme-Organe gestatten kein optimales Auslegen des Drahtes in den Spulenköpfen, weil der vom Drahtausgabe-Organ zum Drahtübernahme-Organ schräg auswärts laufende Draht mit den axial ausladenden Tragfahnen in Konflikt zu kommen droht. Um hierbei den Draht um diese Tragfahne herumzuführen, sind grosse axiale Ausladungen des Drahtübergabe-Organs und grosse radiale Ausladungen des Drahtübernahme-Organs erforderlich. Es sind beidseitig Haken zur Uebernahme des Drahtes erforderlich.

Es ist auch bekannt, mittels an einem durch die Bohrung des ferromagnetischen Körpers durchführbaren Träger radial verstellbaren Zahnstangen angeordneter Drahtausgabe-Organe den Draht an beiden Stirnseiten des ferromagnetischen Körpers nach aussen zu führen und über axial vorstehende Traghaken zu legen, um die Spulenköpfe zu bilden (FR-PS 1 134 892). Ein derartiger Mechanismus ist Jedoch so aufwendig und voluminös, dass er nur bei grossen Bohrungsabmessungen anwendbar ist, und die Möglichkeiten, den Draht an den Spulenköpfen optimal auszulegen sind beschränkt.

Aufgabe der Erfindung ist es, ein Wickelverfahren und eine Wickelmaschine zur Durchführung desselben zu schaffen, welche es gestatten, auch ferromagnetische Körper mit Bohrungen kleinen Durchmessers unter optimalen Bedingungen zu bewickeln.

Die Lösungen sind in Anspruchen 1 und 7 angegeben. Dadurch, dass der Draht beidseitig des Körpers zum Auslegen auf die Spulenköpfe mindestens annähernd axial zugeführt wird, ist ein optimales Herumführen des Drahtes um axial vorstehende Tragorgane für die Spulenköpfe und damit ein optimales Auslegen des Drahtes auf diese Tragorgane zur Formung der Spulenköpfe möglich. Es ist damit nicht nur eine gute Nutzung des verfügbaren Wickelraumes mit axial recht weit vorstehenden Spulenköpfen möglich, sondern es kann auch ein hoher Füllfaktor der Wicklung erreicht werden. Da das Drahtausgabe-Organ und das Drahtübernahme-Organ gleichartig zum Verlegen des Drahtes ausgebildet und schwenkbar sind, ist für jeden zugeführten Draht nur je eines dieser Organe erforderlich.

Gemäss Anspruch 7 sind sowohl das Drahtausgabe-Organ als auch das Drahtübernahme-Organ axial langgestreckt und schlank ausgeführt und gleichartig antreibbar, was ein optimales Arbeiten auch bei kleinen Bohrungsdurchmessern erlaubt. Die besonderen Massnahmen zur Drahtübergabe und -übernahme stellen ein zuverlässiges Arbeiten auch bei schlanken Organen

Die Steuerung der Bewegungsabläufe erfolgt vorzugsweise mittels Mikroprozessor, welcher über Servomotoren oder Schrittmotoren mit oder ohne Rückmeldung die Bewegungsabläufe digital steuert.

Bei einem Wickelverfahren bzw. einer Wickelmaschine der oben besprochenen Art, wo der Draht jeweils von einer Seite axial durch die Bohrung des ferromagnetischen Körpers durchgeführt, hierauf der durchgeführte Draht zu einer Schlaufe ausgezogen und auf den Spulenkopf ausgelegt und schliesslich wieder durch die Bohrung zurückgeführt wird, treten im zugeführten Draht sehr grosse Geschwindigkeitsunterschiede auf. Anderseitst sollte im Draht stets optimaler Zug herrschen. Es ist daher vorzugsweise auch eine Spannvorrichtung für den Draht gemäss Anspruch 9 vorgesehen, die eine optimale Ueberwachung und gegebenenfalls Steuerung des Zuges im Draht während des Wickelns erlaubt.

Die Erfindung betrifft schliesslich auch einen Stator einer elektrischen Maschine gemäss Anspruch 17. Der Umstand, dass die besondere Wicklungsart erlaubt, mit einer Anzahl von je zwei Spulenköpfe abstützenden Stiften auszukommen, die der halben Nutenzahl entspricht, bringt sowohl für die Abmessungen der Wicklungsköpfe an den Stirnseiten des Stators als auch für die Freiheit der Führung der Drahtausgabe- und Drahtübernahme-Organe beim Wickeln erhebliche Vorteile.

Die Erfindung, wird nun anhand von in der Zeichnung dargestellten Ausführungsbeispielen näher erläutert.

Figur 1 zeigt in perspektivischer Ansicht, teilweise im Schnitt, einen bewickelten Stator und die Wickelorgane; Figur la zeigt die Wicklung schematisch,

Figur 2 zeigt eine Seitenansicht, teilweise im Schnitt, der Wickelmaschine,

Figur 3 zeigt eine Seitenansicht des Verstellmechanismus für die Drahtausgabe-Organe,

Figur 4 zeigt einen stark vergrösserten Schnitt durch ein Drahtausgabe- und ein Drahtübernahme-Organ sowie einen Teil des zu bewickelnden Stators,

Figur 5 zeigt einen Schnitt nach Linie V/V in Figur 3,

Figur 6 zeigt einen der Figur 5 entsprechenden Schnitt für die Drahtübernahme-Stellung,

Figur 7 zeigt eine Drahtspannvorrichtung, die

Figuren 8 bis 20 veranschaulichen die Bewegungsabläufe beim Aufbringen einer Windung auf einen Spulenkopf auf der Seite des Drahtübernahme-Organs, und die

Figuren 21 bis 23 zeigen einen Stütz- und Isolierring.

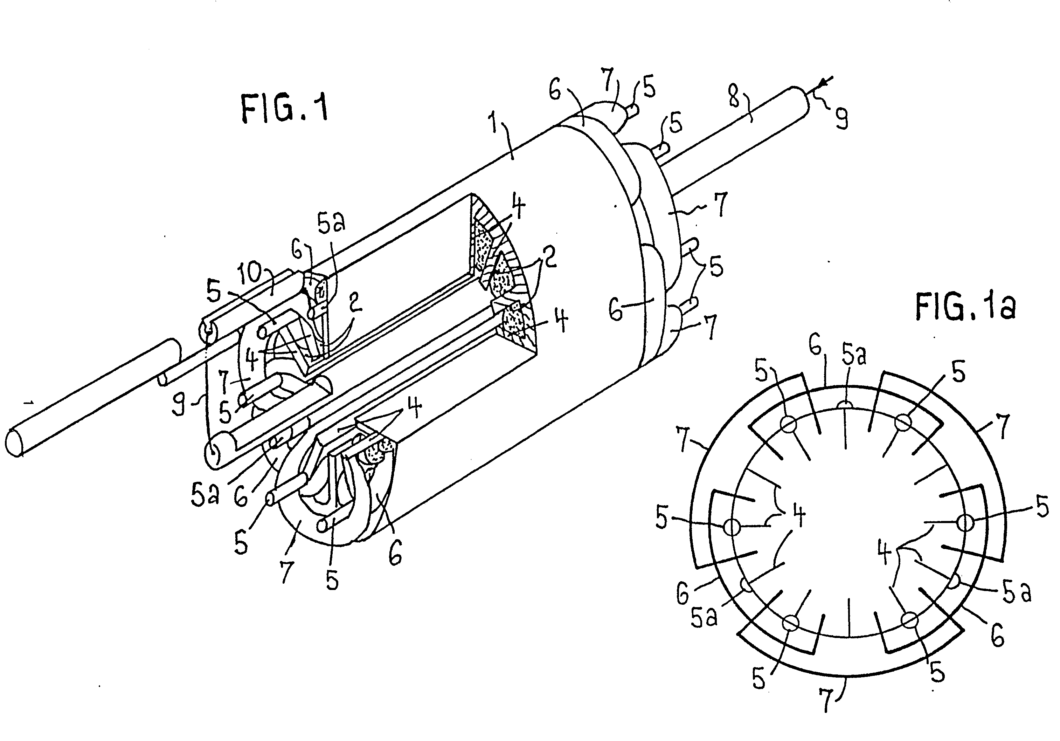

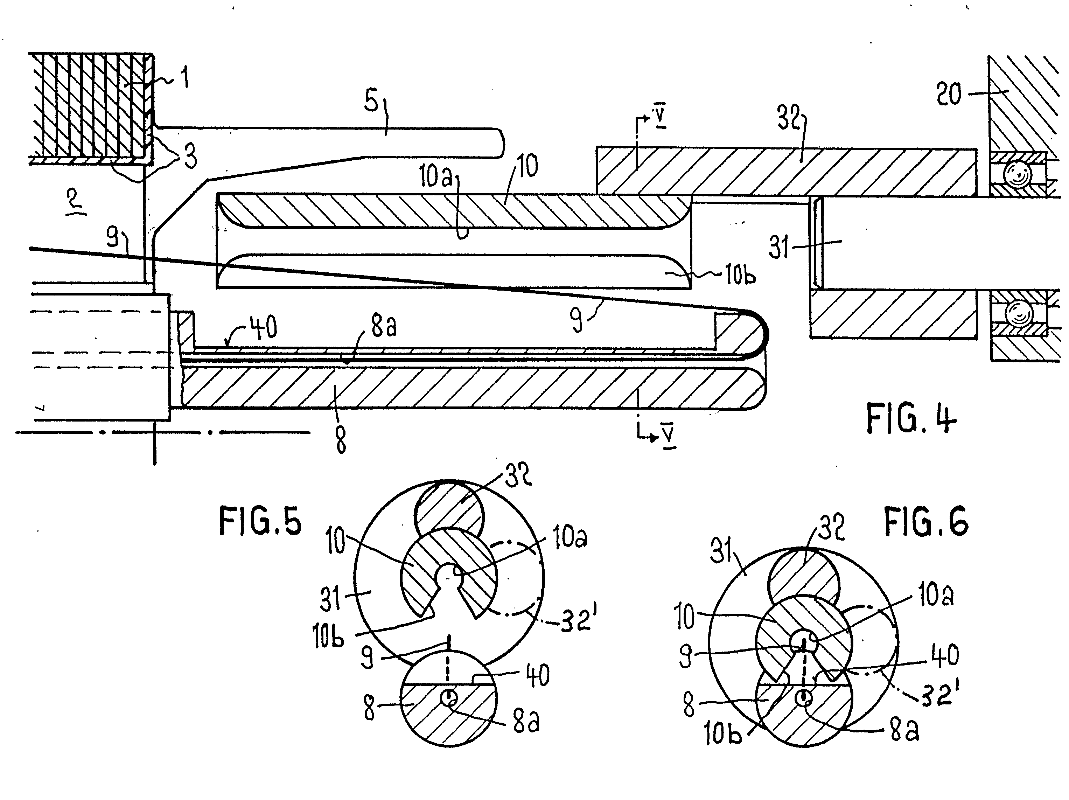

Anhand der Figur 1 wird vorderhand nochmals das Grundsätzliche der gestellten Aufgabe und der erfindungsgemässen Lösung erläutert. Es geht darum, den Eisenkörper 1 des Stators eines Schrittmotores mit vierpoligem, permanent magnetischem Rotor vollautomatisch zu bewickeln. Der Eisenkörper 1 kann in üblicher Weise aus gestanzten Eisenblechen aufgebaut sein, was in Figur 1 der Einfachheit halber nicht angedeutet ist. Die Nuten 2 und die Stirnseiten des Eisenkörpers sind mit einem im Spritzgussverfahren hergestellten Isoliermantel 3 bedeckt (Figur 4), der in Figur 1 zur Vereinfachung nicht dargestellt ist. Der Eisenkörper 1 weist zwölf Nuten 2 auf. Im Bereiche von sechs Stegen 4 des Eisenkörpers 1, also im Bereiche jedes zweiten Steges, sind an beiden Stirnseiten am Isoliermantel axial vorstehende Stifte 5 angeformt, deren Länge genügt, um zwei sich kreuzende Spulenköpfe der Wicklung zu tragen. Die Wicklung weist, wie insbesondere in Figur 1a ersichtlich ist, drei je um 120° versetzte, innere Spulen 6 mit axial innenliegenden Spulenköpfen und drei unter sich auch um je 120° versetzte, äussere Spulen 7 mit axial aussenliegenden Spulenköpfen auf. Der Wickelschritt jeder Spule beträgt drei Nuten, wobei je zwei benachbarte Spulenseiten benachbarter innerer Spulen 6 in benachbarten Nuten liegen. In den zwei von je einer inneren Wicklung 6 überbrückten Nuten liegen benachbarte Spulenseiten benachbarter äusserer Spulen 7. Diese Art der Wicklung eignet sich nicht nur besonders gut zum vollautomatischen Bewickeln des Stators gemäss vorliegender Erfindung, wie noch gezeigt werden wird, sondern sie gestattet auch eine vorteilhafte Arbeitsweise eines dreiphasigen Schrittschaltmotors. Die Schaltung der Wicklung und ihre Speisung mit Schrittimpulsen ist für die vorliegende Erfindung ohne Belang und wird daher nicht beschrieben. Wie aus Figur 1 ersichtlich und in Figur 1a durch volle Kreise angedeutet, sind Stützstifte 5 voller axialer Länge jeweils dort angebracht, wo aus benachbarten Nuten sich direkt überkreuzende Spulenseiten bzw. Spulenköpfe austreten. Die Köpfe der inneren Spulen 6, welche zuerst gewickelt werden, müssen auch in der Mitte noch gestützt werden, und es sind daher je drei Stützstifte 5a geringerer axialer Länge vorgesehen, die in Figur 1a durch Halbkreise angedeutet sind. An drei Stellen, nämlich je in der Mitte der äusseren Spulen 7, sind keine Stützstifte erforderlich. Die besondere Art der Wicklung, die bei grösseren Maschinen gleichartig, aber für höhere Polzahlen ausgeführt sein könnte, hat unter anderem den Vorteil, dass nur halb so viele Stützstifte voller Länge erforderlich sind als der Eisenteil Nuten aufweist. Das ist von besonderer Bedeutung für die Bewegungsfreiheit der noch zu beschreibenden Organe zum Verlegen des Wickeldrahtes im Bereiche der Spulenköpfe.

Ein zusammenarbeitendes Paar der soeben erwähnten Organe ist in Figur 1 dargestellt. Es handelt sich um ein rohrförmiges, langgestrecktes Drahtausgabe-Organ 8, durch welches der Wickeldraht 9 von rechts in Figur 1 axial zugeführt wird. Bei der in Figur 1 dargestellten Phase des Arbeitszyklus tritt der Draht 9 am vorderen Ende des Organs 8 aus und ist durch ein Drahtübernahme-Organ 10 geführt, das radial ausserhalb der Stützstifte 5 liegt. Durch Drehung des Eisenkörpers 1 im Uhrzeigersinn in Figur 1 kann bei der dargestellten Position der aus einer Nut austretende Draht auf den anschliessenden Spulenkopf 7 ausgelegt werden. Dann wird das Organ 10 radial einwärts bewegt, wobei der Draht 9 stets gespannt bleibt und zu diesem Zweck gegebenenfalls auch rückwärts gezogen werden kann, worauf der Draht vom Organ 10 durch Einwärtsdrehung desselben freigegeben und dem Organ 8 übergeben wird. Dieses wird dann axial durch die Bohrung des Eisenkörpers 1 zurückbewegt, also nach rechts in Figur 1, um den Draht in eine Nut einzuziehen, worauf durch kombinierte Radialbewegungen und Rückdrehung des Eisenkörpers eine Windung des Spulenkopfes an der anderen, in Figur 1 rechts liegenden, Stirnseite des Eisenkörpers gebildet wird. Diese Vorgänge werden später noch eingehender erläutert. Es ist jedoch schon ersichtlich, dass durch wiederholte zyklische Axial- und Radialbewegungen der Organe 8 und 10, wobei der Draht jeweils vom Organ 10 aus dem Organ 8 übernommen wird, der Draht in Nuten eingezogen und auf Spulenköpfe gelegt wird, ohne dass eines der Organe 8 oder 10 in eine Nut eintreten müsste.

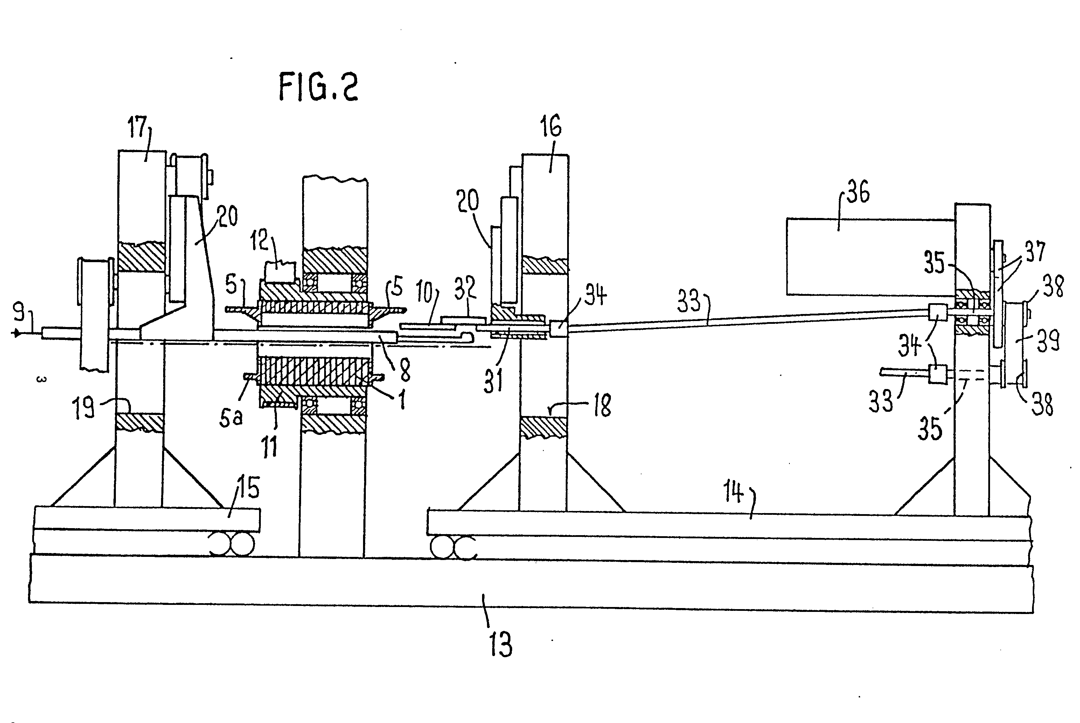

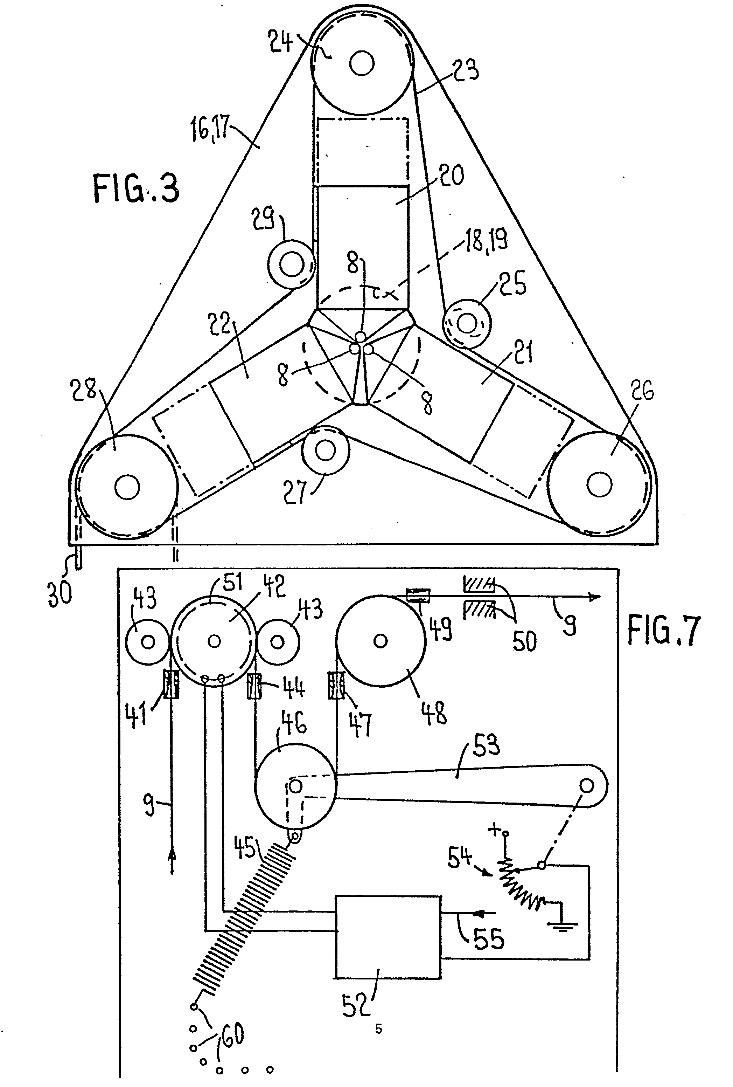

Bevor nun der eigentliche Wickelvorgang näher beschrieben wird, sollen die Mechanismen erläutert werden, welche den Organen 8 und 10 die erforderlichen zyklischen Bewegungsabläufe zu erteilen gestatten. Der Stator 1 ist in einem drehbar gelagerten Halter 11 mit zylindrischer Bohrung gehalten (Figur 2). Dieser Halter 11 kann mittels eines Zahnriemens 12 von einem nicht dargestellten Stellmotor, beispielsweise einem Schrittmotor gedreht werden. Auf einem Bett 13 der Wickelmaschine sind zwei Axialschlitten 14 und 15 in Richtung der Achse des Stators 1 bzw. des Halters 11 verschiebbar. Sie können durch nicht dargestellte Motoren, beispielsweise Schrittmotoren, unabhängig voneinander axial verstellt werden. Auf jedem der Schlitten 14 und 15 ist eine gleichartige Platte 16 bzw. 17 mit einer Oeffnung 18 bzw. 19 befestigt. Eine dieser Platten 16 oder 17 ist im Figur 3 in Stirnansicht gezeigt. Axialsymmetrisch zur Oeffnung 18 bzw. 19 sind auf jeder Platte an der dem Halter 11 bzw. dem Stator 1 zugewandten Seite drei radial bewegliche Kulissen 20, 21 und 22 angeordnet, die längs um je 120° versetzten Achsen radial beweglich sind. Ein gemeinsamer Zahnriemen 23 ist über Rollen 24 bis 29 geführt, und er kann mittels eines Zahnriemens 30 über die Rolle 28 angetrieben werden. Je die zu den Kulissen 20, 21 und 22 parallel verlaufenden Trumme des Zahnriemens 23 sind mit diesen Kulissen verbunden und erteilen denselben jeweils synchrone, radiale Bewegungen. An den Kulissen 20 bis 22 der Platte 17 sind drei Drahtausgabe-Organe 8 befestigt, von welchen in Figur 2 zur Vereinfachung nur eines dargestellt ist. In den Kulissen 20 bis 22 der Platte 16 ist je eine Welle 31 drehbar gelagert, die ko-axial zu dem damit über einen exzentrischen Träger 32 verbundenen Drahtübernahme-Organ 10 liegt. Wiederum ist in Figur 2 nur je eines dieser Elemente dargestellt, aber entsprechend den drei vorhandenen Kulissen 20 bis 22 sind drei Drahtübernahme-Organe 10 und Wellen 31 axialsymmetrisch angeordnet. Der Antrieb der Wellen 31 erfolgt über je eine Kardanwelle 33 mit zwei Kardangelenken 34 von je einer Welle 35. Die obere in Figur 2 gezeigte Welle 35 wird von einem Motor 36 über ein Getriebe 37 angetrieben. Zum synchronen Antrieb der übrigen Wellen 35 bzw. Drahtübernahme-Organe 10 sitzen auf allen Wellen 35 gleichartige Zahnriemenscheiben 38, über die ein gemeinsamer Zahnriemen 39 geführt ist. Es ist damit klar, dass über die im grossen ganzen nicht gezeigten Stellmotoren die Organe 8 und 9 in einem gegebenen Bereich axial und radial verstellt werden können, und dass zusätzlich die Drahtübernahme-Organe 10 um ihre eigene Längsachse geschwenkt werden können.

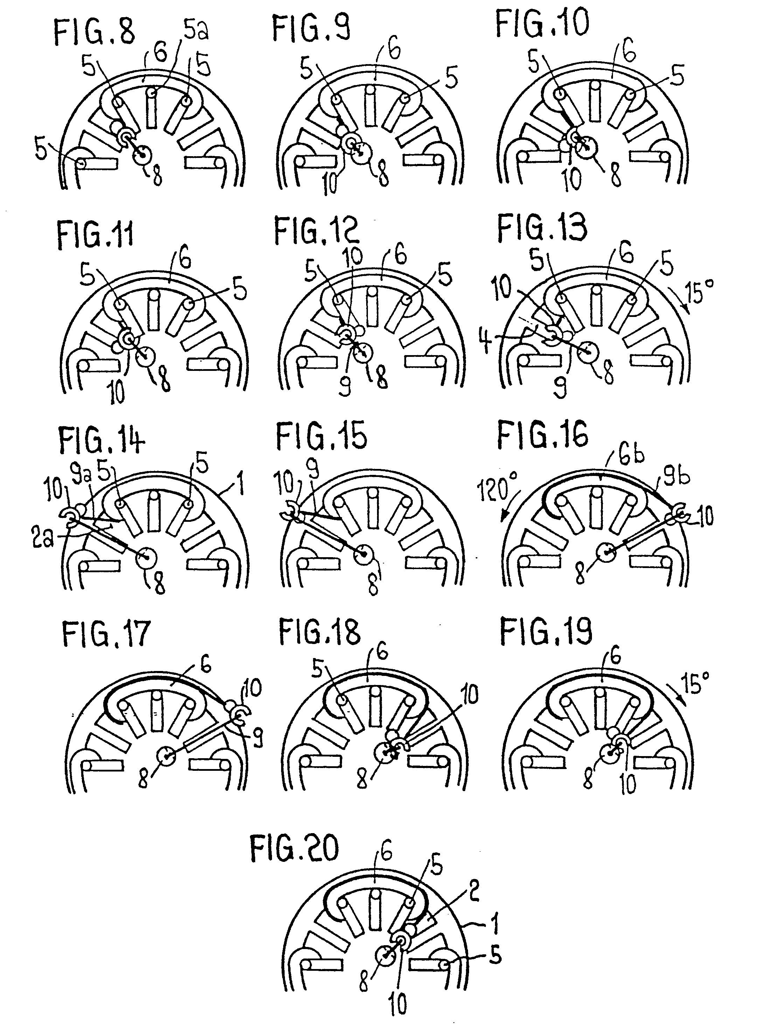

Da, wie bereits betont, die Organe 8 und 10 nicht in die Nuten des Eisenkörpers einzutreten brauchen, können sie einen verhältnismässig grossen Querschnitt aufweisen. Das ist insbesondere aus den Figuren 4 bis 6 ersichtlich, welche diese Organe in erheblicher Vergrösserung darstellen. Beide Organe weisen ausserhalb ihrer, der Drahtführung dienenden, Bohrung 8a bzw. 10a erhebliche Wandstärken auf, so dass an der Austrittstelle des Organs 8 sowie an der Eintrittstelle und der Austrittstelle des Organs 10 Führungsflächen oder Düsenflächen mit ziemlich grossen Krümmungsradien gebildet werden können. In Figur 4 ist angedeutet, dass ein durch die beiden Organe laufender Draht 9 mit relativ grossem Radius umgelenkt wird, was für seine schonende Behandlung und auch für den Kraftaufwand bei seiner Verlegung wesentlich ist. Das Organ 8 weist dabei eine zentralsymmetrische Drahtausgabeöffnung mit über etwa 180° gekrümmtem Querschnitt und das Drahtübernahme-Organ 10 eine Drahteintritts- und -ausgabeöffnung mit je über etwa 90° gekrümmtem Querschnitt auf. Das Organ 8 weist an seiner Aussenseite eine Anfräsung 40 auf, deren axiale Länge diejenige des Organs 10 etwas übertrifft, so dass das Organ 10 bis zum Anschlag an den Grund der Ausfräsung in dieselbe eintreten kann. Das ist aus Figur 6 ersichtlich, aus welcher zugleich ersichtlich ist, dass ein an der Aussenseite des Organs 8 nach hinten verlaufender, gespannter Draht durch die radiale Oeffnung 10b eingetreten ist und sich im Bereiche derBohrung 10a des Organs 10 befindet. In diesem Stadium kann der Draht durch Drehung des Organs 10 um seine Achse gefasst und dann radial nach aussen, etwa in die in Figur 4 dargestellte Lage gezogen werden.

Wie bereits angedeutet, ist es für eine zuverlässige Führung des Drahtes während des Wickelvorganges wesentlich, dass der Draht stets im erforderlichen Mass gespannt bleibt, selbst wenn er in gewissen Phasen des Wickelvorganges etwas zurückgezogen werden muss. Zu diesem Zwecke werden die zu verarbeitenden Drähte je über eine Spannvorrichtung zugeführt, welche in Figur 7 schematisch dargestellt ist. Der von einer nicht dargestellten Vorratsspule ablaufende Draht 9 gelangt durch eine Führung 41 auf eine Spannwalze 42, gegen welche er durch zwei Druckrollen 43 angepresst wird. Der Draht gelangt dann durch eine weitere Führung 44, eine durch eine Feder 45 belastete Messrolle 46, eine weitere Führung 47, ein Umlenkrad 48 und eine Führung 49 zwischen Klemmbakken 50 einer Sperrvorrichtung und von hier in je eines der Organe 8. Die Spannrolle 42 sitzt auf der Welle eines Motors 51, welcher mit den Ausgängen eines Reglers 52 verbunden ist. Die Messrolle 46 ist an einem schwenkbaren Hebel 53 gelagert, auf welchen die Feder 45 wirkt. Mit der Schwenkachse des Hebels 53 ist der Schleifer eines Potentiometers 54 verbunden, der mit einem Eingang des Reglers 52 verbunden ist. Der Regler weist ausserdem einen Sollwert-Eingang auf, welcher über eine Leitung 55 mit dem die Maschine steuernden Mikroprozessor verbunden ist. Jede Abweichung der am Potentiometer 54 abgegriffenen Spannung vom Sollwert-Signal bewirkt eine entsprechende Aenderung des Stromes im Motor 51, in dem Sinne, dass die Spannung im Draht dem Sollwert angenähert wird. Durch Anpassung des Sollwertes während eines Arbeitszyklus, d.h. während des Einlegens einer Drahtwindung, kann die Drahtspannung optimal angepasst werden. In der Regel wird der Motor 51 ein Drehmoment erzeugen, das der Laufrichtung entgegenwirkt, also bremsend wirkt, aber er kann in Phasen sehr schnellen Drahtvorlaufes vorübergehend auch in Drehrichtung angetrieben sein. Der Regler 52 ist entsprechend, je nach Art des Motors 51, zu gestalten.

Es erfolgt nun die Beschreibung der einzelnen Vorgänge zum Einlegen einer Drahtwindung einer inneren Spule 6. Es wird dabei mit den Vorgängen zum Verlegen des Drahtes auf der Seite des Drahtübernahme-Organs 10 begonnen, weil diese Vorgänge umständlicher sind. Diese Vorgänge werden denn auch anhand der Figuren 8 bis 20 dargestellt. Ausgegangen wird von der Position nach Figur 8, welche der Position nach den Figuren 4 und 5 entspricht. Das Organ 8 ist in seiner vorderen Endlage bzw. in Uebergabeposition, und der vorher eingelegte Draht verläuft gestreckt durch eine Nut 2 von der gegenüberliegenden Seite des Stators 1 zum vorderen Ende des Organs 8. Es folgen die folgenden Operationen, wobei das Drahtausgabe-Organ kurz mit DAO und das Drahtübernahme-Organ kurz mit DUO bezeichnet sind.

1) DUO bewegt sich radial nach innen bis zur Berührung mit DAO. Die Drahtspannung ist auf schwach gestellt. Es werden die Positionen nach Figuren 6 und 9 erreicht.

2) DUO dreht sich um 90° und erreicht die Position nach Figur 10. Drahtzug schwach.

3) DUO geht radial nach aussen bis vor den Spulenkopf und erreicht Position nach Figur 11. Drahtzug schwach.

4) DUO dreht weiter in der gleichen Richtung um etwa 140° und erreicht Position nach Figur 12. Drahtzug schwach.

5) Stator wird um 15° im Uhrzeigersinn gedreht, womit Stellung nach Figur 13 erreicht wird. DUO befindet sich symmetrisch vor dem Steg 4 und zwischen den Köpfen der Spulen 6. Drahtspannung schwach.

6) DUO bewegt sich radial nach aussen, ohne Berührung mit den Spulenköpfen und erreicht Stellung nach Figur 14 ausserhalb der Stützstifte 5 bzw. 5a. Drahtspannung schwach. Das Drahtstück 9a ist ganz in die Nut 2a eingezogen und darin gespannt.

7) DUO dreht um 90° zurück und erreicht Stellung nach Figur 15. Drahtzug schwach.

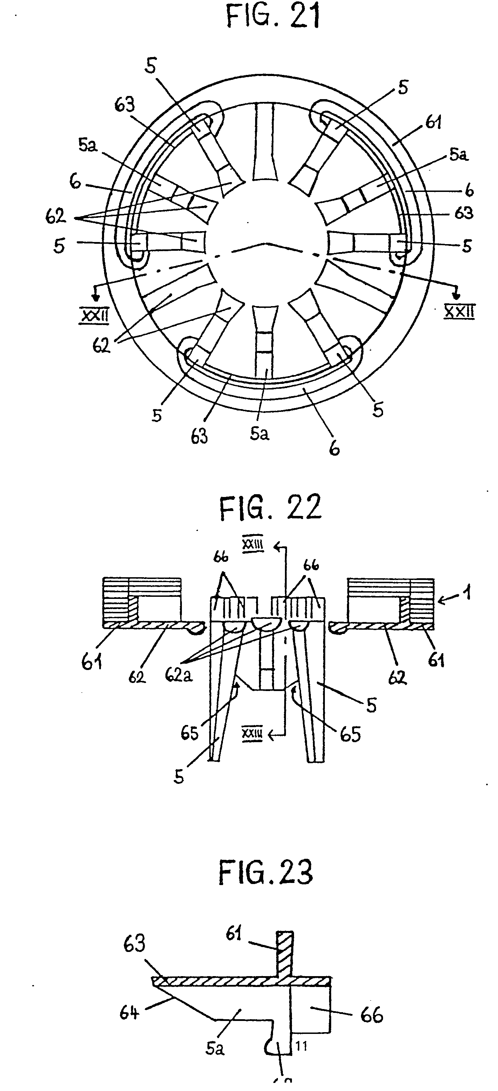

8) Stator dreht im Gegenuhrzeigersinn um 120°, womit die relative Lage nach Figur 16 erreicht wird. Das Drahtstück 9b ist auf den Spulenkopf 6b gelegt worden. Drahtspannung schwach.

9) DUO dreht sich um 50° zurück und erreicht Position nach Figur 17. Drahtzug schwach.

10) DUO bewegt sich radial nach innen und erreicht Position nach Figur 18 praktisch im Anschlag an DAO, d.h. in Uebergabeposition. Drahtzug schwach.

11) Stator dreht um 15° im Uhrzeigersinn, womit Uebergabestellung nach Figur 19 erreicht wird. Drahtzug schwach.

12) DUO dreht um 90° zurück und bewegt sich etwas radial nach aussen, womit die Position nach Figur 20 erreicht wird. DUO und DAO liegen symmetrisch vor der Nut 2, in welcher die eine Spulenseite liegt.

13) DAO wird axial durch die Statoröffnung auf die andere Seite desselben zurückgezogen. Zugleich wird ein Befehl zur Erhöhung der Drahtspannung an den Sollwerteingang des Reglers 52 übermittelt, so dass der Zug im Draht erhöht wird. Der Draht wird hierbei durch die Oeffnung von DUO rückwärts herausgezogen und folgt DAO, womit der dauernd gespannte Draht in die in Figur 20 bezeichnete Nut 2 eingezogen wird.

14) DAO wird radial nach aussen bis vor den Spulenkopf verstellt. Drahtspannung hoch.

15) Der Stator 1 dreht um 15° im Gegenuhrzeigersinn, damit DAO zwischen benachbarten Spulenköpfen nach aussen durchtreten kann. Drahtspannung hoch.

16) DAO wird weiter radial nach aussen bis ausserhalb der Stützstifte 5 bewegt. Drahtspannung hoch.

17) Der Stator wird um 120° im Uhrzeigersinn gedreht, womit der Draht auf den rückseitigen Spulenkopf ausgelegt wird. Drahtspannung hoch.

18) DAO wird ganz radial nach innen verstellt, und zwar in der Position symmetrisch vor einem Steg 4 des Stators zwischen den benachbarten Spulenköpfen. Drahtspannung hoch.

19) Stator dreht im Gegenuhrzeigersinn um 15°, so dass DAO symmetrisch vor diejenige Nut zu stehen kommt, in welcher die andere Spulenseite liegt. Drahtspannung hoch.

20) Die Drahtspannung wird auf niedrig gestellt und DAO wird axial in die Stellung nach Figur 4 vorgeschoben. Der Draht wird hierbei mit angemessener Spannung in die Nut 2 eingezogen. Es ist die Position nach Figur 4 erreicht, d.h. der Zyklus ist geschlossen und kann in der beschriebenen Weise von neuem beginnen.

Sind die inneren Spulen 6 in dieser Weise gewickelt, erfolgt eine Drehung des Stators, um 270° im Gegenuhrzeigersinn, womit man die Ausgangsposition zum Wickeln der diametral gegenüberliegenden äusseren Spule 7 erreicht hat. Je zwei diametral gegenüberliegende Spulen sind schliesslich in Serie geschaltet und bilden eine Phasenwicklung. Der Uebergang von einer Seite zur anderen erfolgt allerdings selbstverständlich, wenn das den Draht ausgebende Organ 8 oder 10 radial ausserhalb der schon erstellten inneren Spulen und der Stützstifte 5 liegt, damit der Verbindungsdraht jeweils aussen herumgelegt wird. Ein Vorteil liegt hierbei darin, dass alle Spulen im gleichen Wicklungssinne gewickelt werden, so dass die Bewegungen stets gleichartig durchgesteuert werden können. Beim Wickeln der äusseren Spulen 7 mit den axial weiter aussen liegenden Spulenköpfen wird man allerdings mindestens die axialen, gegebenenfalls auch die radialen, Bewegungen etwas anders programmieren müssen als zum Wickeln der inneren Spulen 6. Die Steuerung durch Mikroprozessor gestattet es grundsätzlich auch, den Bewegungsablauf sogar während des Wickelns je einer Spulenart zu verändern. Es können dabei auch Verstellgeschwindigkeiten und die Drahtspannung laufend den Gegebenheiten optimal angepasst werden.

Es sind verschiedene Ausführungsvarianten möglich. Wie bereits erwähnt, könnten bei hochpoligeren Maschinen je mehr als drei Spulen miteinander gewickelt werden. Es könnte jedoch auch mit einem einzigen Paar von Ausgabeund Uebernahme-Organen nur je eine Spule auf einmal gewickelt werden. Es sind andere Wicklungsarten möglich. Anstelle des hülsenförmigen Uebernahme-Organs 10 könnten zwei in einem gewissen Abstand voneinander angeordnete Haken vorhanden sein. Die Stützelemente für die Spulenköpfe können etwas anders gestaltet sein. Anstelle der kurzen Stifte 5a könnten etwas breitere Tragsegmente angeformt sein.

Besonders erwähnt sei, dass das Prinzip der Drahtspannvorrichtung auch in anderem Zusammenhang, insbesondere mit anders gearteten Wickelmaschinen, verwendet werden kann. Es sind auch in bezug auf diese Spannvorrichtung verschiedene Varianten möglich. Im einfachsten Fall kann der Regler 52 wegfallen und der Motor 51 entwickelt ein konstantes Drehmoment entgegen dem Drehsinn, um dem Draht oder sonstigen durchlaufenden Element eine konstante Spannung zu verleihen. In diesem Falle kann natürlich auch die Messrolle 46 wegfallen oder aber sie hat nur noch die Funktion, kurzzeitige Differenzen im Zug und/oder der Geschwindigkeit des durchgeführten Elementes auszugleichen. In Figur 7 sind verschiedene Anhänge-Organe 60 für die Feder dargestellt. Durch Anhängen der Feder an verschiedene dieser Elemente, kann der Regelbereich verändert werden. Die Klemmbacken 50 der Drahtspannvorrichtung dienen der Sicherung des Drahtes beim Einrichten der Wickelmaschine bzw. beim Auswechseln eines fertig bewickelten Stators gegen einen neuen unbewickelten. Zur Durchführung dieses Wechsels wird einer der Schlitten, vorzugsweise der Schlitten 14 genügend weit entfernt, um den bewickelten Stator axial ausfahren und den neuen axial einsetzen zu können. In diesem Zusammenhang sei noch erwähnt, dass die Wickeloperation mit dem obenerwähnten Vorgang 13 beginnt, nachdem die herausgezogenen Drahtenden an der Vorderseite, d.h. rechts in Figur 2 gesichert worden sind.

Die Stützstifte 5 und 5a könnten unter Umständen umgangen werden, wenn die Spulen jeweils über an den Stirnseiten des Eisenkörpers liegende Füllkörper gewickelt würden. Nach dem Entfernen dieser Füll- oder Stützkörper könnten dann die Spulenköpfe in üblicher Weise axial einwärts und radial auswärts geformt werden.

Anstelle des Eisenkörpers könnten jeweils zum Auslegen des Drahtes auf die Spulenköpfe die Sätze von Drahtauslege- und Drahtübernahme-Organe gedreht werden.

Aus den Figuren 8 bis 20 und der zugehörigen Beschreibung der Bewegungsabläufe ergibt sich, dass der Träger 32 des Drahtübernahme-Organs 10 in bestimmten Arbeitsstellungen den zwischen den Organen 8 und 10 verlaufenden Draht erfasst und zur Seite lenkt, was in den Figuren nicht dargestellt ist. Da immer im gleichen Sinne gewickelt wird und somit das Drahtübernahme-Organ immer dieselben Bewegungsabläufe ausführt, könnte dieser Nachteil dadurch behoben werden, dass der Träger 32 nicht symmetrisch gegenüber der Nut des Drahtübernahme-Organs, sondern wie in Figuren 5 und 6 in strichpunktierten Linien angedeutet, um 270° versetzt gegenüber der Nut angeordnet wird.

Das obenerwähnte Erstellen eines vollständigen, die Statornuten durchsetzenden Isoliermantels kann ersetzt werden durch das Anbringen vorfabrizierter Stütz- und Isolierringe an beiden Stirnseiten des Stators. Eine Ausführung eines solchen Ringes aus Kunststoff ist in den Figuren 21 bis 23 dargestellt, wobei Fig. 21 eine Stirnansicht auf den Stator der erst mit den inneren Spulen 6 bewickelt ist, Fig. 22 ein Schnitt nach Linie XXII-XXII in Fig. 21 und Fig. 23 ein vergrösserter Teilschnitt nach Linie XXIII-XXIII in Fig. 22 ist. Der Ring weist einen flachen, ringförmigen Radialflansch 61 auf, der gemäss Fig. 22 an der Stirnseite des Blechpakets 1 anliegt. An diesen Flansch 61 schliessen radial nach innen ragende Deckleisten 62 an, von welchen jede die Stirnseite eines Steges 4 des Blechpakets 1 abdeckt. Diese Deckleisten 62 werden nach innen breiter und sind mindestens an ihrem inneren Ende in Umfangsrichtung breiter als die Pole der Stege 4. Die Deckleisten 62 sind am inneren Ende auch axial etwas verdickt und bilden dort eine Kuppe 62a, die den Draht beim Wickeln gut in die Nutenöffnungen lenkt, ohne dass er an den Kanten der Stege 4 angreifen und dort verletzt werden könnte. Im Bereiche von sechs Deckleisten sind lange Stützstifte 5 etwa rechteckigen Querschnitts angeformt. Im Bereiche weiterer drei Deckleisten sind keine Stützstifte vorhanden. Im Bereiche weiterer drei Deckleisten sind kurze Stützstifte 5a geformt, und diese kurzen Stützstifte werden von je einer symmetrisch dazu und an den benachbarten langen Stützstiften 5 anschliessenden Stützwand 63 überbrückt. Die kurzen Stützstifte 5a weisen, wie besonders Fig. 23 zeigt, am äusseren Ende eine Anschrägung 64 auf, welche beim Wickeln die Drahtführung erleichtert. Die Stützwände 63 weisen in ihrer Mitte, über den kurzen Stützstiften 5a, grösste axiale Ausladung auf und sind an den Seiten auf die langen Stützstifte zu abgeschrägt. Es entstehen damit zwischen den langen Stützstiften 5 und den Stützwänden 63 dreieckige Ausnehmungen 65, welche ein sattes Aufwickeln der dort durchtretenden äusseren Spulen 7 auf die inneren Spulen 6 erlauben. Durch die Stützwände 63 wird eine optimale Stützung der inneren Spulen 6 auch im Bereiche der Nuten, welche die äusseren Spulen aufnehmen, und damit eine optimale Nutzung des Wicklungsraumes erreicht. Es wird damit insgesamt eine sehr kompakte Wicklung mit geringem Anteil an unwirksamem Kupfer und folglich eine hohe spezifische Leistung bei hohem Wirkungsgrad erreicht.

An der Rückseite weisen die Stütz- und Isolierringe Uförmige, nach innen offene Isoliermanchetten 66 auf, die in je eine Nut des Blechpakets eingreifen. Zwischen die an den Enden in die Nuten eingreifenden Manchetten 66 werden in die Statornuten in üblicher Weise Isolierfolien eingelegt. Die Herstellung ist insofern einfach, als die vorfabrizierten Ringe mit ihren Isoliermanchetten 66 einfach in die Nuten des Eisenpakets eingesteckt werden. Eine weitere Befestigung ist nicht erforderlich.

Wenn auch die dargestellte vierpolige Dreiphasenwicklung eine besonders vorteilhafte Ausführung darstellt, sind wie erwähnt - beliebige

Wicklungsarten höherer Polzahl möglich, und solche Wicklungen können auch für beliebig hohe Zahlen von Phasen geschaltet sein. Bei der modernen elektronischen Speisung von Motoren spielt die Phasenzahl keine entscheidende Rolle mehr, und eine Erhöhung der Phasenzahl erlaubt bessere Gleichförmigkeit des Drehmomentes und der Drehzahl des Motors zu erreichen.

**Patentansprüche**

1. Verfahren zum automatischen Bewickeln eines ringförmigen ferromagnetischen Körpers (1) für eine rotierende elektrische Maschine, mit nach innen offenen, axial verlaufenden Nuten (2), wobei mit Hilfe mindestens eines Drahtausgabe-Organs (8), das von der einen Seite der Bohrung des Körpers (1) durch dieselbe durchführbar ist und mindestens eines Drahtübernahme-Organs (10) durch wiederholte Uebergabe des Wickeldrahtes (9) zwischen zugeordneten Organen, axiales Durchführen des Drahtes durch die Bohrung und Einlegen des Drahtes in eine Nut sowie Formen einer Windung je eines Spulenkopfes (6, 7) durch radiale Auswärtsbewegung eines Organs, Relativdrehung zwischen diesem Organ und dem Eisenkörper und radiale Einwärtsbewegung des Organs je eine Spule gewickelt wird, dadurch gekennzeichnet, dass man den Draht 9) mittels eines Drahtübernahme-Organs (10) mit radialer Oeffnung (10b) auf einer erheblichen axialen Länge aus einem axial langgestreckten Drahtausgabe-Organ (8) übernimmt und den Draht beidseitig des Eisenkörpers (1) über die Länge von axial vorstehenden Tragorganen (5, 5a) je mittels des Drahtausgabe (8) - bzw. Drahtübernahme-Organs (10) axial zuführt und abwechslungsweise mittels entsprechender Bewegung des Drahtausgabe- und des Drahtübernahme-Organs über diese Tragorgane legt.

2. Verfahren nach Anspruch 1, wobei ein Körper (1) verwendet wird, der an den Stirnseiten zwischen den Nuten axial vorstehende Tragstifte (5) für die Spulenköpfe (6, 7) aufweist, dadurch gekennzeichnet, dass ein Eisenkörper mit halb so vielen Tragstiften (5) wie Nuten verwendet wird, und dass über jeden Tragstift sich kreuzende Spulen (6, 7) aus diesem Tragstift benachbarten Nuten (2) gewickelt werden.

3. Verfahren nach Anspruch 1 oder 2, dadurch gekennzeichnet, dass man die axial langgestreckten, schlanken Drahtausgabe- (8) und Drahtübernahme-Organe (10) radial zwischen Tragstiften hindurchführt, um den Draht (9) auszulegen.

4. Verfahren nach einem der Ansprüche 1 bis 3, dadurch gekennzeichnet, dass in jede Nut (2) nur eine Spulenseite eingebracht wird und alle Spulen im gleichen Wicklungssinne gewickelt werden.

5. Verfahren nach einem der Ansprüche 1 bis 4, zur Herstellung einer Dreiphasenwicklung am Stator (1) eines Schrittmotors, dadurch gekennzeichnet, dass in einem ersten Arbeitsgang sich nicht überschneidende Spulen (6) mit Wicklungsschritten von drei Nuten und mit angrenzenden Spulenseiten benachbarter Spulen in benachbarten Nuten, und in einem zweiten Arbeitsgang eine gleiche Zahl sich nicht überschneidender Spulen (7) mit gleichem Wicklungsschritt und mit angrenzenden Spulenseiten in den zwei benachbarten Nuten zwischen Spulenseiten einer vorher gewickelten Spule (6) erstellt werden.

6. Verfahren nach einem der Ansprüche 1 bis 5, dadurch gekennzeichnet, dass die Bewegungsabläufe der Organe (8, 10) dem Fortschritt der Wicklung angepasst werden,

7. Wickelmaschine zur Durchführung des Verfahrens nach Anspruch 1, wobei mindestens ein von einer Seite axial durch die Bohrung eines in einem Halter (11) gehaltenen Körpers (1) durchführbares Drahtausgabe-Organ (8) vorgesehen ist, durch welches der Draht aus dem Vorrat zugeführt wird, und dass mindestens ein zugeordnetes Drahtübernahme-Organ (10) vorgesehen ist, das zur zeitweiligen Uebernahme des Drahtes (9) aus dem ersten Organ (8) bestimmt ist, und dass Mittel zur koordinierten Steuerung der Bewegungsabläufe der Organe (8, 10) vorhanden sind, dadurch gekennzeichnet, dass sowohl das Drahtausgabe-Organ (8) als auch das Drahtübernahme-Organ (10) axial langgestreckte, schlanke Gestalt aufweisen und gleichartige Antriebe zum Auslegen des Drahtes zwischen und radial ausserhalb axial vorstehender Tragorgane (5, 5a) an beiden Stirnseiten des Eisenkörpers (1) geeignet sind, wobei das Drehtübernahme-Organ (10) über eine

8. Wickelmaschine nach Anspruch 7, dadurch gekennzeichnet, dass der Halter (11) drehbar im Maschinengestell gelagert ist und mittels eines Stellmotors um vorgegebene Schritte verdreht werden kann.

9. Wickelmaschine nach Anspruch 7 oder 8, dadurch gekennzeichnet, dass der Draht (9) über eine Spannrolle (42) zugeführt wird, die mit einem Motor (51) verbunden ist, der mit einem den Zug im Draht bestimmenden Strom gespeist wird.

10. Wickelmaschine nach Anspruch 9, dadurch gekennzeichnet, dass eine Messvorrichtung (45, 46, 53, 54) für die Drahtspannung vorgesehen ist, die mit einem Regler (52) für den Motorstrom bzw, den Zug im Draht (9) verbunden ist.

11. Wickelmaschine nach Anspruch 10, dadurch gekennzeichnet, dass der Regler (52) einen Sollwerteingang (55) aufweist, der mit einer Programmsteuerung verbunden ist und über welchen die Drahtspannung jeweils dem momentanen Wickelvorgang anpassbar ist, wobei der der Motor (51) bzw. die Spannrolle (42) in beiden Richtungen antreibbar ist.

12. Wickelmaschine nach einem der Ansprüche 7 bis 11, dadurch gekennzeichnet, dass je das Drahtübernahme-Organ (10) rohrförmig mit einem radialen Eintrittsschlitz (10b) ausgebildet ist und drehbar und radial sowie axial verstellbar zur Uebernahme und Ausgabe des Drahtes (9) angeordnet ist.

13. Wickelmaschine nach einem der Ansprüche 7 bis 12, dadurch gekennzeichnet, dass die Organe (8, 10) sich erweiternde Drahtausgabe- oder -Düsenöffnungen, deren Krümmungsradien den Drahtdurchmesser erheblich übersteigen, aufweisen, wobei je das Drahtausgabe-Organ (8) eine zentralsymmetrische Drahtausgabeöffnung mit über etwa 180° gekrümmten Querschnitt und je das Drahtübernahme-Organ (10) eine Drahteintrittsund -Ausgabeöffnung mit je über etwa 90° gekrümmtem Querschnitt aufweist.

14. Wickelmaschine nach Anspruch 12 oder 13, dadurch gekennzeichnet, dass je das Drahtausgabe-Organ (8) rohrförmig ausgebildet ist und hinter seiner Drahtausgabeöffnung eine seitliche Ausnehmung (40) aufweist, und dass je das zugeordnete Drahtübernahme-Organ (10) radial versetzt an einem Träger angeordnet ist, derart, dass je das Drahtübernahme-Organ (10) in die Ausnehmung des zugeordneten Drahtausgabe-Organs (8) eintreten kann, um den Draht zu übernehmen.

15. Wickelmaschine nach einem der Ansprüche 7 bis 14, dadurch gekennzeichnet, dass die Organe (8, 10) je auf einer radial verstellbaren Kulisse (20) angeordnet sind, wobei je das Drahtausgabe-Organ (8) an seiner Kulisse befestigt ist, während je das Drahtübernahme-Organ (10) in seiner Kulisse drehbar gelagert und über eine Kardanwelle (33) drehbar ist, wobei die Kulissen (20) an axial einstellbaren Schlitten (14, 15) angeordnet sind.

16. Wickelmaschine nach Anspruch 15, wobei je mehrere Organe (8, 10) axialsymmetrisch angeordnet und bewegbar sind, dadurch gekennzeichnet, dass alle Kulissen (20) der einen Organe (8), alle Kulissen (20) der anderen Organe (10) und die Kardanwellen (33) je von einem Motor über Zahnriemen (29, bzw. 39) antreibbar sind.

17. Stator einer elektrischen Maschine, insbesondere eines Dreiphasen-Schrittschaltmotors, mit in axialen Innennuten (2) liegenden Spulenseiten und an den Stirnseiten auf axial über den Eisenkörper (1) vorstehende Stützorgane (5) aufliegende Spulenköpfe (6, 7), dadurch gekennzeichnet, dass in jeder Nut (2) nur eine Spulenseite liegt, und dass je eine Spule erster Art mit axial innen liegendem Spulenkopf (6) mit einem Wicklungsschritt von drei Nuten symmetrisch zwischen zwei Spulen einer zweiten Art mit axial aussen liegendem Spulenkopf (7) mit je einem Wicklungsschritt von drei Nuten und mit je einer Spulenseite zwischen den Spulenseiten der Spule erster Art angeordnet ist, und dass halb so viele Stützorgane (5) wie Nuten (2) zur gemeinsamen Stützung je eines Kopfes (6, 7) einer Spule der ersten und zweiten Art vorgesehen sind.

18. Stator nach Anspruch 17, dadurch gekennzeichnet, dass jeder innen liegende Spulenkopf durch ein weiteres Stützorgan (5a, 63) gestützt ist, welches axial kürzer ist als die Stützorgane (5) zur gemeinsamen Stützung je eines Kopfes einer Spule der ersten und zweiten Art.

19. Stator nach Anspruch 18, dadurch gekennzeichnet, dass als weiteres Stützorgan eine Stützwand (63) vorgesehen ist.

20. Stator nach Anspruch 19, dadurch gekennzeichnet, dass die Stützwand (63) an zwei benachbarte Stützorgane (5) grösserer axialer Länge anschliesst und an den Anschlussstellen geringere axiale Länge aufweist als in der Mitte zwischen den Stützorganen (5).

21. Stütz- und Isolierring zum Aufsetzen auf die Stirnseite des Blechpakets (1) eines Stators, mit Stützorganen gemäss irgendeinem oder mehreren der Ansprüche 17 bis 20.

22. Ring nach Anspruch 20, dadurch gekennzeichnet, dass er Isoliermanchetten (66) aufweist, die zum Eingreifen in Nutenenden des Bechpakets (1) bestimmt sind.

## Claims

1. A method for automatically winding an annular ferromagnetic body (1) for a rotating electric machine, with axially extending slots (2) opening inwardly, whereby coils are wound each by means of a wire delivering member (8) which may be shifted through the bore of said body (1) from one side thereof to the other, and of at least one wire receiving member (10), by repeated transfer of the winding wire (9) between said associated members, axially passing said wire through the bore and inserting of said wire into a slot as well as forming of a turn of each coil end (6,7) by radial outward displacement of one of said members, relative rotation between this member and said body and radial inward displacement of said member, characterized in that one receives said wire (9) over a substantial axial length by means of a wire receiving member (10) with a radially extending opening (10b) from an axially elongated wire delivering member (8) and axially conducts the wire on both sides of said body (1) over the length of axially projecting supporting members (5,5a) each time by means of said wire delivering member (8) and said wire receiving member (10) respectively, and applies said wire alternatively onto said supporting members by means of corresponding displacement of the wire delivering member and the wire receiving member.

2. A method according to claim 1, wherein a body (1) is used having axially projecting supporting pins (5) for the coil ends (6,7) at its end faces between said slots, characterized in that a ferromagnetic body having a number of supporting pins (5) which is half the number of slots is used and in that coils (6,7) from slots (2) adjacent said,supporting pin and crossing each other are wound over each supporting pin.

3. A method according to claim 1 or 2, characterized in that one displaces the axially elongated slim wire delivering members (8) and wire receiving members (10) radially between supporting pins in order to wind the wire (9).

4. A method according to one of the claims 1 to 3, characterized in that one coil side only is inserted into each slot (2) and in that all coils are wound in the same winding sense.

5. A method according to one of the claims 1 to 4 for producing a three phase winding on the stator (1) of a stepping motor, characterized in that in a first step not-overlapping coils (6) having a winding pich of three slots and having adjacent coil sides of adjacent coils in neighbouring slots, and that in a second step a same number of not-overlapping coils (7) having the same winding pitch and having adjacent coil sides in the two neighbouring slots between coil sides of a formerly wound coil (6) are produced.

6. A method according to one of the claims 1 to 5, characterized in that the cyclic displacements of said members (8,10) are continuously adapted to the progress of the winding.

7. A winding machine for carrying out the method according to claim 1, having at least one wire delivering member (8) adapted to be axially transferred from one side through the bore of said body (1) held in a support (11), the wire being fed through this wire delivering member from a wire supply, and at least one associated wire receiving member (10) adapted for temporary receipt of the wire (9) from said first member (8), and in that means are provided for co-ordinated control of displacing cycles of said members (8,10), characterized in that as well said wire delivering member (8) as said wire receiving member (10) are of axially elongated slim shape and that similar driving means are provided for laying out said wire between and radially outside of axially projecting supporting members (5,5a) at each end face of said ferromagnetc body (1), whereby said wire receiving member (10) comprises over a substantial axial length a radially extending traversing opening for said wire or hooks spaced apart for seizing the wire.

8. A winding machine according to claim 7, characterized in that said support (11) is rotatably mounted in a machine frame and may be adjusted by means of an adjusting motor by predetermined steps.

9. A winding machine according to claim 7 or 8, characterized in that the wire (9) is fed over a tensioning pulley (42) coupled with a motor (51), this motor being adapted to be fed by a current determining the pull in the wire.

10. A winding machine according to claim 9, characterized by a measuring device (45,46,53,54) for detecting the pull in the wire, this measuring device being connected to a governor (52) controlling the motor current and pull in the wire (9) respectively.

11. A winding machine according to claim 10, characterized in that said governor (52) comprises an input (55) for a nominal value, this input being connected to a program control, the pull in the wire being thus adaptable to the momentary phase of the winding cycle, the motor (51) and said tensioning pulley (42) respectively being adapted to be driven in each direction.

12. A winding machine according to one of the claims 7 to 11, characterized in that said wire receiving member (10) is of tubular shape with a radial entering slot (10b), this member being rotatable and displaceable in radial and axial direction for receiving and releasing said wire (9).

13. A winding machine according to one of the claims 7 to 12, characterized in that said members (8,10) comprise delivering openings or nozzles having each a radius of curvature substantially exceeding the diameter of the wire, each wire delivering member (8) having a centrally symmetrical wire delivering opening with a cross section extending through about 180° and said wire receiving member (10) comprising a wire entering opening and a wire dispensing opening having each a cross section extending through about 90°.

14. A winding machine according to claim 12 or 13, characterized in that said wire delivering member (8) is of tubular shape and has a lateral recessed portion (40) behind its wire outlet opening, the associated wire receiving member (10) being connected to a carrier in radially offset position such that this wire receiving member (10) may enter into said recessed portion of the associated wire delivering member (8) in order to receive the wire.

15. A winding machine according to one of the claims 7 to 14, characterized in that said members (8,10) are mounted on a radially displaceable slide (20), whereby the wire delivering member (8) is fixed to its slide while the wire receiving member (10) is rotatably mounted in its slide and may be driven through a cardan shaft (33), said slides (20) being mounted on axially adjustable supports (14,15).

16. A winding machine according to claim 15, whereby a number of members (8,10) are disposed and displaceable in axially symmetrical manner, characterized in that all slides (20) of one (8) of said members, all slides of the other (10) of said members and all cardan shafts (23) are driven by associated motors and toothed belts (29, resp.39).

17. A stator of an electric machine, particularly of a three phase stepping motor, having coil sides in axially extending internal slots (2) and coil ends (6,7) at the end faces, supported on supporting members (5) axially projecting from a ferromagnetic body (1), characterized in that one coil side only is disposed in each slot (2) and that each coil of a first kind having a coil end (6) in an axially inner position and having a winding pitch of three slots is symmetrically disposed between two coils of a second kind having their coil ends (7) in an axially outer position and having each a winding pitch of three slots and having each one coil side between the coil sides of a coil of the first kind, and that the number of supporting members (5) supporting a coil end (6) of a coil of the first kind and a coil end (7) of a coil of the second kind is half the number of slots (2).

18. A stator according to claim 17, characterized in that each coil end disposed in an inner position is supported by another supporting member (5a,63) which is axially shorter than said supporting members (5) for common support of coil ends of a coil of the first kind and a coil of the second kind.

19. A stator according to claim 19, characterized in that said other supporting member is a supporting wall (63).

20. A stator according to claim 19, characterized in that said supporting wall (63) is connected to two neighbouring supporting members (5) of greater axial length, said supporting wall being of small axial length where connected to said supporting members than in its centre between said supporting members (5).

21. A supporting and insulating ring adapted to be applied at the front face of the ferromagnetic body (1) of a stator, having supporting members according to anyone or any combination of the claims 17 to 20.

22. A ring according to claim 21, characterized in that it comprises insulating collars (66) adapted for being inserted into slots ends of the ferromagnetic body (1).

**Revendications**

1. Procédé pour le bobinage automatique d'un corps ferromagnétique annulaire (1) pour une machine électrique tournante, avec des fentes (2) s'étendant axialement et s'ouvrant vers l'interieur, des bobines étant bobinées chacune à l'aide d'un organe délivreur de fil (8) qui peut être passe à travers le perçage du corps (1), d'un côte à l'autre de celui-ci, et d'au moins un organe récepteur de fil (10), par transfert répété du fil de bobinage (9) entre des organes associés, en passant le fil à travers le perçage et en logeant le fil dans une fente ainsi qu'en formant une spire de chaque tête de bobine (6,7) par déplacement radial vers l'extérieur de l'un des organes, rotation relative entre cet organe et le corps ferromagnétique et déplacement radial vers l'intérieur de cet organe, caractérisé en ce que l'on reçoit le fil (9) sur une substantielle longueur axiale à l'aide d'un organe receveur de fil (10) avec une ouverture radiale (10b) à partir d'un organe délivreur de fil (8) allongé axialement et conduit le fil axialement des deux côtés du corps ferromagnétique (1) sur la longueur d'organes supports (5,5a) dépassant axialement, chaque fois respectivement à l'aide de l'organe délivreur de fil (8) et de l'organe receveur de fil (10), et applique le fil alternativement sur ces organes supports à l'aide d'un déplacement correspondant de l'organe délivreur de fil et de l'organe receveur de fil.

2. Procédé selon la revendication 1, dans lequel est utilisé un corps (1) comprenant à ses faces frontales, entre les fentes, des goupilles supports (5) dépassant axialement pour les têtes de bobines (6,7), caractérisé en ce qu'un corps ferromagnétique avec un nombre de goupilles supports (5) égal à la moitié du nombre de fentes est utilisé et en ce que les bobines (6,7) de fentes adjacentes à ces goupilles supports et se croisant mutuellement sont bobinées sur chacune de ces goupilles support.

3. procédé selon la revendication 1 ou 2, caractérisé en ce qu'on déplace radialement les organes délivreur de fil (8) et receveur de fil (10) minces allongés axialement entre les goupilles support, afin de placer le fil (9).

4. Procédé selon l'une des revendications 1 à 3, caractérisé en ce qu'un seul côté de bobine est logé dans chaque fente (2) et en ce que toutes les bobines sont bobinées dans le même sens d'enroulement.

5. Procédé selon l'une des revendications 1 à 4, pour fabriquer un enroulement triphasé de stator (1) d'un moteur pas à pas, caractérisé en ce que l'on produit dans une première étape des bobines (6) non chevauchantes avec un pas d'enroulement de trois fentes et ayant des côtés de bobines adjacents de bobines voisines dans des fentes voisines, et dans une seconde étape un même nombre de bobines (7) non chevauchantes avec un même pas d'enroulement et ayant des côtés de bobines adjacents dans les deux fentes voisines situées entre des côtés de bobines d'une bobine (6) bobinée précédemment.

6. Procédé selon l'une des revendications 1 à 5, caractérisé en ce que les mouvements de déplacement des organes (8,10) sont continuellement adaptés au processus de déroulement du bobinage.

7. Machine à bobiner pour la mise en oeuvre du procédé selon la revendication 1, avec au moins un organe délivreur de fil (8) déplacable axialement à partir d'un côté à travers le perçage du corps (1) tenu dans un support (11), le fil étant délivré par cet organe à partir d'un ravitailleur, et au moins un organe receveur de fil (10) associé prévu pour recevoir temporairement le fil (9) du premier organe (8), des moyens étant prévus pour une commande coordonnée du déroulement des déplacements des organes (8,10), caractérisée en ce que l'organe délivreur de fil (8) ainsi que l'organe receveur de fil (10) sont de forme mince, allongée axialement et que des moyens d'entraînement similaires sont prévus pour disposer le fil entre les organes supports (5,5a) et radialement vers l'extérieur de ces organes supports dépassant axialement des deux faces frontales du corps ferromagnétique (1), l'organe receveur de fil (10) comprenant sur une longueur axiale substantielle une ouverture radiale traversante pour le fil ou des crochets espacés pour saisir le fil.

8. Machine à bobiner selon la revendication 7, caractérisée en ce que le support (11) est monté rotativement dans un chassis de la machine et qu'il peut être tourné par pas prédéterminés à l'aide d'un moteur d'ajustement.

9. Machine à bobiner selon la revendication 7 ou 8, caractérisée en ce que le fil (9) est délivré par l'intermédiaire d'une poulie de tension (42) reliée à un moteur (51) alimenté par un courant déterminant la traction dans le fil (9).

10. Machine à bobiner selon la revendication 9, caractérisé en ce qu'il est prévu un dispositif de mesure (45,46,53,54) pour détecter la tension du fil, ce dispositif de mesure étant connecté à un régulateur (52) du courant du moteur, respectivement de la traction dans le fil (9).

11. Machine à bobiner selon la revendication 10, caractérisée en ce que le régulateur (52) comprend une entrée de valeur de référence connectée à une commande de programme et au moyen de laquelle la tension dans le fil est adaptable à la phase momentanée du processus d'enroulement, le moteur (51), respectivement la poulie de tension (42) étant susceptibles d'être entraînés dans les deux directions.

12. Machine à bobiner selon l'une des revendications 7 à 11, caractérisée en ce que l'organe receveur de fil (10) est de forme tubulaire avec une fente d'entrée radiale (10b), cet organe étant rotatif et déplaçable radialement et axialement pour recevoir et délivrer le fil (9).

13. Machine à bobiner selon l'une des revendications 7 à 12, caractérisée en ce que les organes (8,10) comprennent des ouvertures ou buses délivreuses de fil dont les rayons de courbure sont substantiellement plus grands que le diamètre du fil, chaque organe délivreur de fil (8) ayant une ouverture délivreuse de fil à symétrie centrale avec une section s'étendant sur environ 180°, l'organe receveur de fil (10) comprenant une ouverture d'entrée de fil et une ouverture délivreuse de fil ayant chacune une section s'étendant sur environ 90°.

14. Machine à bobiner selon la revendication 12 ou 13, caractérisée en ce que l'organe délivreur de fil (8) est de forme tubulaire et qu'il comprend un logement latéral (40) derrière son ouverture délivreuse de fil, l'organe receveur de fil (10) associé (10) étant couplé à un porteur décalé radialement de manière que cet organe receveur de fil (10) peut entrer dans ce logement de l'organe délivreur de fil associé (8) pour recevoir le fil.

15. Machine à bobiner selon l'une des revendications 7 à 14, caractérisée en ce que les organes (8,10) sont montés chacun sur une coulisse (20) déplaçable radialement, l'organe délivreur de fil (8) étant fixé à sa coulisse alors que l'organe receveur de fil (10) est monté rotativement à sa coulisse et qu'il peut être entraîné par un arbre à cardan (33), les coulisses (20) étant montées sur des supports ajustables axialement (14,15).

16. Machine à bobiner selon la revendication 15, comprenant plusieurs organes (8,10) disposés et déplaçables d'une manière axiale symétrique, caractérisée en ce que toutes les coulisses (20) d'un des organes (8), toutes les coulisses (20) de l'autre des organes (10) et tous les arbres à cardan (33) sont entraînés par des moteurs associés et des courroies crantées (29, resp.39).

17. Stator d'une machine électrique, plus particulièrement d'un moteur pas à pas triphasé, avec des côtés de bobines logés dans des fentes intérieures axiales (2) et des extrémités de bobines (6,7) supportées par des éléments de support (5) dépassant axialement des faces frontales d'un corps ferromagnétique (1), caractérisé en ce qu'un seul côté de bobine est disposé dans chaque fente (2) et en ce que chaque bobine d'une première sorte ayant une extrémité de bobine (6) dans une position intérieure axiale et ayant un pas d'enroulement de trois fentes est disposée symétriquement entre deux bobines d'une seconde sorte ayant leurs extrémités de bobines (7) dans une position axiale extérieure, un pas d'enroulement de trois fentes et ayant chacune un côté de bobine entre les côtés de bobines d'une bobine de la première sorte et en ce que le nombre d'éléments supports (5) supportant une extrémité de bobine (6) d'une bobine de la première sorte et une extrémité de bobine (7) d'une bobine de la seconde sorte est la moitié du nombre de fentes (2).

18. Stator selon la revendication 17, caractérisé en ce que chaque extrémité de bobine logée intérieurement est supportée par un autre élément support (5a,63) plus court axialement que les éléments supports (5) qui supportent en commun les extrémités de bobine d'une bobine de la première et de la seconde sorte.

19. Stator selon la revendication 18, caractérisé en ce que l'autre élément support est une paroi support (63).

20. Stator selon la revendication 19, caractérisé en ce que la paroi support (63) est raccordée à deux éléments supports (5) voisins de plus grande longueur axiale, la paroi support étant de plus faible longueur axiale à l'endroit de son raccordement aux éléments supports qu'en son centre, entre les éléments supports.

21. Anneau support et isolant prévu pour être appliqué à la face frontale du corps ferromagnétique (1) d'un stator ayant des éléments supports selon n'importe laquelle des revendications 17 à 20.

22. Anneau selon la revendication 21, caractérisé en ce qu'il comprend des colliers isolants (66) prévus pour être insérés dans des fentes du corps ferromagnétique (1).

FIG.1

FIG.1a

FIG.2

0 108 040

FIG.3

FIG.7

FIG. 4

FIG. 5

FIG. 6

0 108 040

FIG.8  FIG.9  FIG.10
FIG.11  FIG.12  FIG.13
FIG.14  FIG.15  FIG.16
FIG.17  FIG.18  FIG.19
FIG.20

**0 108 040**

## FIG. 21

## FIG. 22

## FIG.23